# EUROPEAN PATENT APPLICATION

(11) **EP 4 748 231 A2**
(43) Date of publication of application: **27.05.2026**
(21) Application number: 26172153.4
(22) Date of filing: 20.03.2015
(51) Int. Cl.: A01N 25/30

(54) **ADJUVANT COMPOSITION, TREATMENT COMPOSITION AND AQUEOUS SPRAY FORMULATIONS SUITABLE FOR AGRICULTURALLY-RELATED USE**

(62) Divisional of application: 15719307.9
(71) Applicant: GreenA B.V., 1098 XH Amsterdam (NL)
(72) Inventor: BONN, Daniel, AMSTERDAM (NL)
(74) Representative: Algemeen Octrooi- en Merkenbureau B.V.

(57) **Abstract**

The present invention relates to an adjuvant composition, and a treatment composition for use in an aqueous spray formulation suitable for agricultural use that provide a reduced drift and increased deposition. Said composition/formulation comprises a polyethylene oxide polymer and a non-ionic surfactant.

## Description

The present invention relates to an adjuvant composition, and a treatment composition for use in an aqueous spray formulation suitable for agricultural use.

In the agricultural industry, plant promoter substances such as nutrients may have to be applied and/or various types of problems or "pests" must be controlled or eliminated to enhance and/or promote growth of the plants in certain area, such as fields of crops, wooded areas, grazing areas for cattle etc.. With "pests" is meant small animals (such as field mice), weeds, insects, foliage, vegetation, etc.. A product must be selected which is effective in stimulating or promoting plant growth and/or controlling or eliminating a specific pest (called plant promoter product in the present invention) and which is usable in the particular area. This plant promoter product usually comprises an active ingredient, water and one or more additives. The product needs to be applied to the (plants on the) area, for example by spraying.

The present invention is related to an adjuvant composition that can use used to improve the spraying of such plant promoter products. Such products may include as an active ingredient e.g. a pesticide or an agent for controlling plant growth. Such products are commercially available in the form of a solution, dispersion or emulsion in an aqueous medium. Plant promoter products are usually applied by means of spraying. Aqueous spray formulations have been used for several decades to apply agricultural compounds. By spray deposition the formulation is provided to plant parts, e.g. plant leaves.

A spraying operation is generally conducted either from the air - aerial application using e.g. spray planes - or from the ground - ground application using e.g. crop spraying machines - depending on the situation. Ground spraying also includes hand-held refillable pressurized tank sprayers. Conventional equipment is available for either type of application.

When spraying these commercial products on plants it is important to ensure good coverage of all plants or plants parts while at the same time preventing loss of product which is economically undesirable. Moreover, pollution of the ground and the surface water should be prevented as well as exposure of people and wildlife, which may cause health and environmental damages.

During the spraying of plant protection products (in the form of an aqueous spray formulation further comprising water and optionally one or more additives) several factors play a role, such as the wind blowing away the droplets and the bouncing off the droplets of the plants parts. It is thus challenging to efficiently deposit such plant protection products.

Parameters that play a role during agricultural spraying are the size of the droplets in in the spray of the formulation, the droplet size distribution of the spray as well as the interaction of these droplets with the plant parts (e.g. the stems and/or leaves).

For efficient deposition, it is important to reduce spray drift, being the blowing away of droplets by the wind. The term "drift" is meant to refer to the tendency of a formulation to travel out of the desired area, in other words the tendency to miss the specific pest within the area. Moreover, it is important to increase the deposition. The term "deposition" is meant to refer to the amount of formulation which contacts and stays into contact with the pest within the desired area.

It is on the one hand preferred that the droplet size is small, in order to prevent loss of the active ingredient because of droplets rebounding off the hydrophobic plant leaves. For efficient deposition, it is on the other hand preferred that the droplet size is large, in order to minimize spray drift.

The problems of drift and deposition of aqueous spray formulations are encountered by people in agriculturally-related situations, whether farmers working with crops, people working with forests, etc.. Government regulations in many countries require the reduction of drift or require a so-called "crop-free" zone on the sides of the field to prevent drift of the plant protection products onto neighboring areas.

There are hence two difficulties to address, the reduction of the drift and the optimization of the deposition.

A prior art solution to the deposition problem is to introduce additives in the form of surfactants that greatly reduce the surface tension. These additives are referred to as depositions agents. While the deposition is improved, this increases spray drift which is undesirable.

A prior art combined anti-drift and deposition agent is known from European patent application EP 2 732 705 by the present inventor. This patent application describes the use of polyethylene oxide having a molecular weight between 5 x 10⁵ and 1 x 10⁸ g/mole as a combined anti drift and deposition agent in spraying liquids. This agent has proved to be effective but a further improvement is desirable.

As stated above, the present inventor has discovered that there are at least two important parameters, being the droplet size of the spray and the interaction of the droplets with the plant parts, that need to be simultaneously optimized which is not possible to the desired extend by any prior art formulation.

Aqueous spray formulations are desired - or adjuvant compositions that are intended to be implemented in such an aqueous formulation - which produce large enough droplets to minimize spray drift, but still ensures good deposition and coverage.

It is an aim of the present invention to provide an adjuvant composition that, upon addition to a spray formulation decreases or retards drift of the formulation to which it is added.

It is an aim of the present invention to provide a spray formulation that decreases or retards drift.

It is an aim of the present invention to provide an adjuvant composition that, upon addition to a spray formulation increases the deposition of the formulation to which it is added.

It is an aim of the present invention to provide a spray formulation increases the deposition.

It is another aim of the present invention to provide a method to increase the volume average diameter of the droplets when spraying the formulation.

### Summary of the invention

The present invention relates in a first aspect to an adjuvant composition for an aqueous spray formulation suitable for agricultural use, said adjuvant composition comprising a polyethylene oxide having a molecular weight between 5 x 10⁵ and 1 x 10⁸ g/mole and a non-ionic surfactant.

In an embodiment of said first aspect, said polyethylene oxide has a molecular weight of at least 1 x 10⁶, preferably at least 2 x 10⁶, more preferably at least 3 x 10⁶.

In an embodiment of said first aspect, said surfactant is selected from the group consisting of surfactants having a lipophilic part and a ethylene oxide-containing hydrophilic part, surfactants having a lipophilic part and a polysaccharide-containing hydrophilic part, and block-copolymer surfactants having a polymer lipophilic part and a block copolymer hydrophilic part.

In an embodiment of said first aspect, the lipophilic part is a hydrocarbon part, preferably comprised of one or more aliphatic hydrocarbon chains, preferably alkyl groups or fatty acid residue, more preferably selected from the group consisting of fatty alcohol polyglycol ethers, preferably narrow range ethoxylates (NRE), or ethylene glycol n-alkane ethers.

In an embodiment of said first aspect, the block copolymer surfactants are surfactants having one lipophilic block and one hydrophilic block, preferably comprising styrene or PPO as the lipophilic block, more preferably a (PPO)-(PEO-PPO) block copolymer.

In an embodiment of said first aspect, the surfactants having a lipophilic part and a polysaccharide-containing hydrophilic part are selected from the group, consisting of cocamide monoethanolamines, sorbitan monostearates, and alkyl polyglucosides.

In an embodiment of said first aspect, the weight ratio between the non-ionic surfactant and the polymer is at least 1:5.

The present invention relates in a second aspect to a treatment composition for a spray formulation suitable for agricultural use, said treatment composition comprising polyethylene oxide having a molecular weight between 5 x 10⁵ and 1 x 10⁸ g/mole and a non-ionic surfactant and at least one active ingredient.

In an embodiment of said second aspect, the active ingredient is selected from the group consisting of a plant growth regulator, a defoliant, a growth stimulator, a nutrient, and a pesticide, said pesticide preferably selected from the group consisting of a herbicide, an insecticide, a fungicide, a nematicide, a molluscicide, and a miticide.

In an embodiment of said second aspect, the active ingredient is present in an effective amount.

The present invention relates in a third aspect to an aqueous spray formulation for agricultural use comprising:
* polyethylene oxide having a molecular weight between 5 x 10⁵ and 1 x 10⁸ g/mole, preferably in an amount of at least 0.005 gram/liter;
* a non-ionic surfactant, preferably in an amount of at least 0.001 wt.%;
* an active ingredient, preferably in an effective amount, more preferably in an amount of at least 0.05 wt.%; and
* water.

In an embodiment of said third aspect, the concentration of the non-ionic surfactant is between 0.001 wt.% and 10.0 wt.%, preferably between 0.01 wt.% and 5 wt.%, more preferably between 0.1 wt.% and 1 wt.%.

In an embodiment of said third aspect, the dynamic surface tension is at most 50 mN/m after 100 milliseconds (DST₁₀₀ₘₛ).

In an embodiment of said third aspect, the difference between the dynamic surface tension after 1 milliseconds (DST₁ₘₛ) en after 100 milliseconds (DST₁₀₀ₘₛ) is at least 15 mN/m.

In an embodiment of said third aspect, the first normal stress coefficient is greater than or equal to 10⁻⁸ Pas².

In an embodiment of said third aspect, the viscosity of said aqueous formulation is between 1 and 5 mPa.s, preferably at most 3 mPa.s, more preferably at most 2 mPa.s.

In an embodiment of said third aspect, the amount of polymer is between 0.1 and 10 g/l, preferably between 1 and 5 g/l.

In an embodiment of said third aspect, the characteristic time is at most 50 milliseconds, preferably at most 40 milliseconds, more preferably at most 30 milliseconds, such as at most 20 milliseconds or even at most 15 milliseconds.

In an embodiment of said third aspect, the retraction speed is at most 0.9 m/s, more preferably at most 0.75 m/s, even more preferably 0.5 m/s for a droplet having a radius of 2 mm and an impact velocity of 1 m/s.

In an embodiment of said third aspect, the coverage from spray is at least 100, preferably at least 150 when a spray having a VMD of 200 micrometer is used.

The present invention relates in a further aspect to the use of polyethylene oxide having a molecular weight between 5 x 10⁵ and 1 x 10⁸ g/mole and a non-ionic surfactant as a combined anti drift an deposition agent.

The present invention relates in a further aspect to the use of the adjuvant composition according to the present invention as a combined anti drift an deposition agent.

The present invention relates in a further aspect to the use of the aqueous formulation according to the present invention for reducing the drift and increasing the deposition.

The present invention relates in a further aspect to the use of polyethylene oxide having a molecular weight between 5 x 10⁵ and 1 x 10⁸ g/mole and a non-ionic surfactant for increasing the rainfastness, preferably to a value of at least 50%.

The present invention relates in a further aspect to the use of the adjuvant composition according to the present invention for increasing the rainfastness, preferably to a value of at least 50%.

The present invention relates in a further aspect to the use of the aqueous formulation according to the present invention for increasing the rainfastness, preferably to a value of at least 50%.

The present invention relates in a further aspect to a method of preparing an aqueous spray formulation by mixing the adjuvant composition according to the present invention and water in a weight ration of between 1:50 to 1:500 and at least one active ingredient. In other words, the method relates to the dilution of the adjuvant composition and the addition of an active ingredient.

The present invention relates in a further aspect to a method of preparing an aqueous spray formulation by mixing the treatment composition according to the present invention and water in a weight ration of between 1:50 to 1:500. In other words, the method relates to the dilution of the treatment composition.

### Definitions

The following definitions are used in the present application.
"adjuvant composition" as used in the present application means: a composition that can be used as adjuvant in the preparation of an aqueous spray formulation suitable for agricultural use. Adjuvants are materials that are added to a spray formulation or to increase the effectiveness or change the properties of the active ingredient in the spray formulation.
"treatment composition" as used in the present application means: a composition comprising an active ingredient and adjuvants. Said treatment composition being suitable in the preparation of an aqueous spray formulation suitable for agricultural use.
"formulation" as used in the present application means: an aqueous spray formulation comprising water, at least one active ingredient and optionally one or more additives that is used for spraying.
"active ingredient" as used in the present application means: a chemical compound that is designed to control or eliminate a particular pest or helps stimulate the growth of a plant, such as a pesticide (e.g. a herbicide, an insecticide, a fungicide, a nematicide, a molluscicide, a miticide), a plant growth regulator, a defoliant, a growth stimulator, or a nutrient.
"plant protection product" as used in the present application means: a product comprising one or more active ingredients and optionally one or more additives and/or optionally one or more solvents.
"surfactant" as used in the present application means: a compound that, when present in water, lowers the surface tension of the water, preferably an amphiphilic compound that comprises a hydrophilic part and a lipophilic part.
"effective amount" as used in the present application means: the relative amount of the active ingredient that is effective to control a pest or to promote plant growth when the formulation is spray applied to the plant and/or to the environment of the plant at a given application rate.
"droplet" as used in the present application means: a droplet of an aqueous spray formulation in the spray.
"volume average diameter or volume median diameter (VMD50) also denoted as Dᵥ₅₀" as used in the present description is a measure of the average droplet size. Half of the spray volume consists of droplets smaller than this diameter, the other half consists of larger droplets.
"coverage from spray" as used in the present description is a measure of the amount of coverage of a plant part by the aqueous formulation after spraying. "volume % of droplets < 100 micrometer" as used in the present description is a measure of the fraction of fine droplets, viz. droplets having a diameter of < 100 micrometer in the total spray. It is expressed as a percentage of the total volume of all droplets in a spray.
"characteristic time" as used in the present invention is the time needed for lowering the surface tension by the surfactant used.

### Short description of drawings

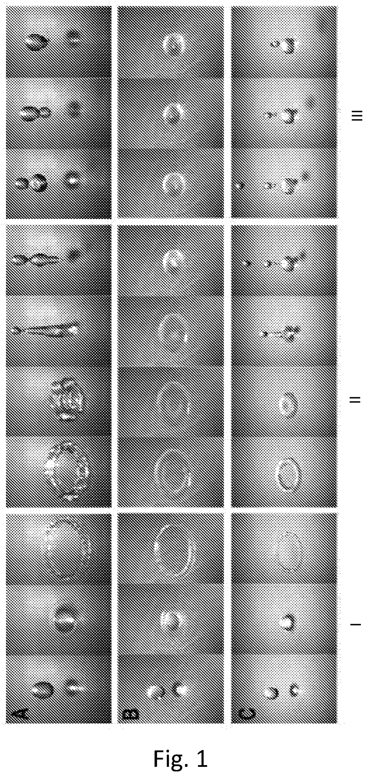

Figure 1 shows the rebound effect of a droplet of water, a solution of a surfactant according to the invention and of a surfactant not according to the invention.

### Detailed description of the invention

The present invention is discussed in more detail below.

The key to the present invention is the specific combination of a non-ionic surfactant and a polyethylene oxide polymer in an adjuvant composition. This combination is important in providing significantly increased droplet size and VMD50 and reduced spray drift as well as increased deposition and weatherability when used in an aqueous spray formulation comprising e.g. a plant protection product.

The formation of droplets and the interaction of the droplets with the water repellent surfaces of the plant parts are strongly non-linear processes and hence these processes are not easily predicted. Moreover, the interaction between polymers and surfactants in generally has not been fully understood. The present inventor has carried out an extensive research program and has discovered that the combination of compounds as specified in claim 1 provides excellent results regarding reduction of drift and deposition increase when used in an aqueous spray formulation. The invention is related to the correct selection of the combination of a polyethylene oxide and a non-ionic surfactant that provides a synergistic effect.

The present invention relates in a first aspect to an adjuvant composition to be used in combination with an active ingredient or plant protection product. This composition is used as an adjuvant and can be added to a spray formulation or used to prepare a spray formulation.

This adjuvant composition is also called a tank-mix composition since it may be added to a spray tank filled with an aqueous spray formulation or water to which also a plant protection product is to be added prior to spraying thereof.

In an embodiment the present adjuvant composition is present in the final spray formulation in an amount of between 1 to 50 and 1 to 500 based on the total weight of the final spray formulation. In other words, 1 part of the present adjuvant composition on 50 to 500 parts of the final spray formulation including the adjuvant composition. Preferably, present adjuvant composition is present in the final spray formulation in an amount of between 1 to 100 and 1 to 300, more preferably between 1 to 150 and 1 to 250, such as about 1 to 200. As a non-limiting example thereof 1 liter of the present adjuvant composition is added to a tank together with a plant protection product and then water is added to provide a final amount of 200 liters of the aqueous spray formulation. The above ranges of the presence of the adjuvant composition in the aqueous spray formulation may also be applied to the presence of the treatment composition in the aqueous spray formulation.

Said plant protection product may be a conventional plant protection product that is commercially available. Said plant protection product comprises at least one active ingredient and one or more additives and/or solvents and/or other components. When the present invention specifies that in a certain aspect or embodiment an active ingredient should be present, this may also be present in the form of a plant protection product. For example, Roundup^{®} is a well known plant protection product (herbicide) comprising glyphosate as the active ingredient. When a certain amount of active ingredient is mentioned, this can be calculated to a certain amount of a plant protection product, depending on the amount of active ingredient in the plant protection product used. For example, Roundup^{®} is available in products having 120, 240, 360, 480, and 680 g/l of active ingredient.

In another aspect, the present invention relates to a treatment composition for a spray formulation suitable for agricultural use. The present treatment composition comprises polyethylene oxide having a molecular weight between 5 x 10⁵ and 1 x 10⁸ g/mole and a non-ionic surfactant and at least one active ingredient. Said treatment composition may be a mixture of the adjuvant composition and one or more active ingredients and/or plant protection products. Said treatment composition may be a mixture of a polyethylene oxide, a non-ionic surfactant and one or more active ingredients and/or plant protection products. Said treatment composition may be seen as a concentrate for preparing an aqueous spray formulation by dilution with water.

The composition according to the present invention may be added to the final formulation in the field prior to spraying or it may be added with the active ingredient to prepare a ready to use premix (treatment composition) or it may be added to a plant protection product to prepare a ready to use formulation. In the case of a ready to use formulation, it may be added during the manufacture of the formulation.

The present composition may be prepared in the form of a concentrate that has a high content of the polymer and surfactant that could be used by dilution and addition of the required active ingredient and/or plant protection product and optionally other additives.

The present invention is also related to a method for making an aqueous ready to use plant protection formulation, comprising combining the above described adjuvant composition with water and with one or more active ingredients. This method is usually carried out at a temperature between 20 and 30 °C, preferably room temperature.

As discussed above, the present invention relates i.a. to an adjuvant composition, a treatment composition and a aqueous spray formulation. In an embodiment, the treatment composition can be obtained by adding to the present adjuvant composition an active ingredient, preferably in the weight ratios described below. In an embodiment, the aqueous spray formulation can be obtained by diluting the treatment composition with water and optionally add one or more other components. The aqueous spray formulation may also be obtained by diluting the adjuvant composition with water and at least add an active ingredient and optionally add one or more other components.

In another aspect, the present invention relates to an aqueous spray formulation that is suitable for agricultural use. The present aqueous spray formulation comprises polyethylene oxide having a molecular weight between 5 x 10⁵ and 1 x 10⁸ g/mole and a non-ionic surfactant and at least one active ingredient and water in amounts that are suitable for direct spray. Said aqueous spray formulation is preferably a ready to use spray formulation. Said aqueous spray formulation may be a mixture of the adjuvant composition and one or more plant protection products and/or active ingredients and water. Said aqueous spray formulation may be a mixture of a polyethylene oxide, a non-ionic surfactant and one or more plant protection products and/or active ingredients and water. Optionally one or more other components may be present in said aqueous spray formulation.

The following embodiments are applicable to all aspects of the present invention unless it is specifically stated that the embodiments relate to a specific aspect of the invention.

The plant protection product used in the present invention can be a conventional pesticide, herbicide, defoliant, miticide, fungicide, insecticide or other product designed to control or eliminate a particular pest or help stimulate the growth of a plant, such as a growth regulator, nutrients etc.. The amount of plant protection product will depend upon the objectives of the spraying operation and can be determined by a person skilled in the art.

It should be noted that surfactants may be present in conventionally used pesticide products. However, these surfactants are merely used as emulsifiers and have different properties, e.g. the ratio of hydrophobic and lipophilic part of the surfactants. These surfactants present in conventionally used plant protection products have little or no effect on the deposition properties. Surfactants are used in usual agricultural formulations to stabilize an emulsion or suspension to facilitate the dispersion of the active ingredient and to promote wetting with other components of the formulation. Such surfactants can be ionic or anionic. The amount of surfactant depends on the form of the formulation. These surfactants do not alter either the drift reduction or the deposition efficiency in a significant way, since they are much less efficient that the non-ionic surfactants used in the present composition. the agents being discussed for the present invention being much more efficient than the surfactants.

The effect of the polyethylene oxide in the present composition is to provide a drift reducing and a deposition increasing effect. Without wishing to be bound by any particular theory, the present inventor believes that the drift reducing properties are the result of a non-linear polymer effect, viz. the non linear stretching of the polymer chains, which effect can be quantified by the normal stress and/or elongational viscosity, which are both high. The deposition increasing effect of the polymer are due to the same effects.

The surfactant also has a deposition increasing effect. Without wishing to be bound by any particular theory, the present inventor believes that this effect is due to the lowering of the (dynamic) surface tension. The dynamic surface tension is an important parameter since when a droplet falls onto a plant part, e.g. a leaf, a large surface is created in a very short period of time. The specific selection of surfactants combined with the specific polyethylene oxide has proven by the inventors to provide the possibility for the surfactant to rise to the surface of the droplet very quickly and hence providing the effect when and where it is required. When the dynamic surface tension of the spray formulation is within the correct range, the surfactant will be able to rise to the surface of the droplet within the desired time scale in order to provide the deposition increasing effect.

In an embodiment, the surfactant is selected based on a combination of a suitable HLB value as well as a suitable value for the dynamic surface tension.

Without wishing to be bound by any theory, the present inventors believe that the polymer contributes a "visco-elastic" effect resulting in a shift of the droplet spectrum, so that there are fewer fine droplets (i.e., less than 100 micrometers) of the final spray product and a more narrow range of droplet sizes.

The volume % of droplets < 100 micrometer is an important parameter since droplets having a smaller size are subject to drift. The volume percentage of fine droplets is measured using the same method as VMD50. The result of the VMD50 measurement is a curve volume % in the spray is plotted against difference diameter ranges, such as 0-20 micrometer, 20-40 micrometer, 40-60 micrometers, 60-80 micrometers, 80-100 micrometers etc. Then the volume percentages of all fractions below 100 micrometers are added to arrive at the total volume percentage of droplets below 100 micrometer. More information about the calculation thereof can be found in the handbook *"*Principles of Colloid and Surface Chemistry, Third Edition, Revised and Expanded" edited by Hiemenz & Rajagopalan, chapter 1, paragraph 5 "some physical characteristics of colloids", page 35, Table 1.6. Said handbook is incorporated by reference into the present application.

The polymer used in the present invention is a polyethylene oxide having a molecular weight between 5 x 10⁵ (500.000) and 10⁸ (100.000.000) g/mole. Preferably, at least 1 x 10⁶ (one million), more preferably at least 2 x 10⁶ (two million), even more preferably, at least 3 x 10⁶ (three million), such as at least 3.5 x 10⁶ (three and a half million). Preferably, at most 1 x 10⁷ (ten million), more preferably at most 5 x 10⁶ (five million), such as most 4.5 x 10⁶ (four and a half million). This polymer is biodegradable, has good anti drift properties and is soluble in water.

In an embodiment of the adjuvant composition, the weight ratio between the polyethylene oxide and the non-ionic surfactant is between 5:1 and 1:10, more preferably between 2:1 and 1:5, more preferably between 1:1 and 1:3, for example 1:2.

In an embodiment, the adjuvant composition comprises polyethylene oxide in an amount of between 0.01 and 1 wt.%, a non-ionic surfactant in an amount of between 1 and 15 wt.%, and water in an amount of 84 to 98.99 wt.% based on the combination of the adjuvant composition.

In an embodiment, the adjuvant composition comprises polyethylene oxide in an amount of between 0.01 and 1 wt.%, a non-ionic surfactant in an amount of between 1 and 15 wt.%, an alcoholic solvent in an amount between 0.5 and 5 wt.% and water in an amount of 79 to 98.49 wt.% based on the combination of the adjuvant composition.

It is also possible that the adjuvant composition according to the present invention is a concentrated adjuvant composition, said concentrated adjuvant composition comprising in an embodiment polyethylene oxide in an amount of between 1 and 30 wt.%, a non-ionic surfactant in an amount of between 70 and 99 wt.%,based on the combination of the concentrated adjuvant composition.

In an embodiment of the treatment composition, the weight ratio between non-ionic surfactant and the active ingredient is between 1:5 and 1:100, more preferably between 1:25 and 1:75, more preferably between 1:40 and 1:60, for example 1:50.

In an embodiment of the treatment composition, the weight ratio between polyethylene oxide and the active ingredient is between 1:10 and 1:500, more preferably between 1:50 and 1:200, more preferably between 1:75 and 1:150, for example 1:100.

In an embodiment, the treatment composition comprises polyethylene oxide in an amount of between 0.01 and 1 wt.%, a non-ionic surfactant in an amount of between 1 and 15 wt.%, an active ingredient in an amount of 5 and 50 wt.% and water in an amount of 24 to 93.99 wt.% based on the combination of the treatment composition.

In an embodiment, the treatment composition comprises polyethylene oxide in an amount of between 0.01 and 1 wt.%, a non-ionic surfactant in an amount of between 1 and 15 wt.%, an active ingredient in an amount of 5 and 50 wt.%, an alcoholic solvent in an amount between 0.5 and 5 wt.% and water in an amount of 19 to 93.49 wt.% based on the combination of the treatment composition.

It is also possible that the treatment composition according to the present invention is a concentrated treatment composition, said concentrated treatment composition comprising in an embodiment polyethylene oxide in an amount of between 0.05 and 5 wt.%, a non-ionic surfactant in an amount of between 10 and 50 wt.%, an active ingredient in an amount of 45 and 79.95 wt.% based on the combination of the concentrated treatment composition.

In the present adjuvant composition and/or treatment composition and/or formulation, one or more solvents may be present in addition to water, preferably selected from the group consisting of aliphatic solvents, more preferably aliphatic alcohols, such as methanol, ethanol, propanol, isopropanol, and butanol, most preferably isopropanol.

In the present adjuvant composition and/or treatment composition and/or formulation, the non-ionic surfactant is preferably selected from the group consisting of surfactants having a lipophilic part and a ethylene oxide-containing hydrophilic part, surfactants having a lipophilic part and a polysaccharide-containing hydrophilic part, and block-copolymer surfactants having a polymer lipophilic part and a block copolymer hydrophilic part. The present inventor has observed that in particular these types of non-ionic surfactants provide the best result when combined with a polyethylene oxide within the specified weight range.

Preferably, the lipophilic part is a hydrocarbon part, for example comprised of one or more aliphatic hydrocarbon chains, such as alkyl groups or fatty acid residue. Examples of suitable liphophilic parts are stearate, octyl phenyl, laureate, palmitate, octyl, decyl or dodecyl chains. The lipophilic part may also comprise one or more aromatic hydrocarbon groups.

Examples of the block copolymer surfactants are surfactants having one lipophilic block and one hydrophilic block, preferably comprising styrene or PPO as the lipophilic block. However, other lipophilic blocks may be used. Preferably, said surfactants comprise PEO or a (random) block copolymer of PEO and PPO as the hydrophilic block.

It should be noted that the so-called HLB value or Hydrophic-Lipophilic Balance is an important parameter for selecting a suitable surfactant. Preferably, the non-ionic surfactant according to the present invention has a HLB value of at least 10, preferably at least 12. In an embodiment, the HLB value of the non-ionic surfactant is at most 25, preferably at most 20, preferably at most 15.

A non-limiting example of a suitable (PPO)-(PEO-PPO) block copolymer is commercially available surfactants from the class Synperonic^{®}, which is a polyalkylene oxide block copolymer. It is a water soluble surfactant having a high HLB value.

Suitable examples of surfactants having an ethylene-oxide containing hydrophilic part and an fatty acid containing lipophilic part are fatty alcohol polyglycol ethers, such as narrow range ethoxylates (NRE), or ethylene glycol n-alkane ethers, or polysorbates. As an ethylene-oxide containing surfactant, Triton^{®} may be mentioned which is commercially available, such as Triton X-100 (C₁₄H₂₂O(C₂H₄O)*ₙ*) having a hydrophilic polyethylene oxide chain (on average it has 9.5 ethylene oxide units) and an aromatic hydrocarbon lipophilic or hydrophobic group. The hydrocarbon group is a 4-(1,1,3,3-tetramethylbutyl)-phenyl group. The HLB value of Triton X-100 is 13.4.

Suitable examples of polymers comprising an aliphatic hydrocarbon lipophilic group and a polysaccharide hydrophilic group are the following: cocamide monoethanolamines, sorbitan monostearates, and alkyl polyglucosides. These have HLB values of between about 13 and 14.

Other examples of suitable non-ionic surfactants are alkoxylated alkylmethylesters, and alkoxylated alkylamines, which have HLB values of between 9 and 15.

Examples of surfactants that are often used as emulsifiers in commercially available pesticide formulations are the non-ionic Zipper^{®} and Silwet^{®} (organic silicone or trisiloxanes), and the anionic AOT (dioctyl sodium sulfosuccinate or docusate sodium). These surfactants are not suitable for use in the present invention. Trisiloxanes have HLB values about 7, the HLB value of AOT is 32.

In an embodiment of all aspects of the present invention a combination of two or more non-ionic surfactants is used wherein each of the surfactants may be independently selected from the non-ionic surfactants above. In a non-limiting example both a ethylene-oxide containing surfactant and a (PPO)-(PEO-PPO) block copolymer are present in either the adjuvant composition, treatment composition or spray formulation according to the present invention. Other combinations of surfactants may also be used.

When a droplet of water hits a surface, such as a plant leaf, it has a rebound effect. This is clearly visible from Figure 1. Figure 1A shows a series of 10 photographs taken by a Phantom high speed camera of a droplet of water falling on a hydrophobic surface (in this case Parafilm^{®} which is a plastic paraffin film).

The first three photographs on the left hand side relate to stage I, being the so-called spreading stage in which the droplets spreads over the surface by the force of the impact. The following four photographs relate to stage II, being the retraction stage wherein the droplet of water retracts with a certain speed (retraction speed) because of the high dynamic surface tension. The last three photographs relate to stage III, the so-called relaxation stage wherein the water droplet rebounds of the surface and does not spread over the surface as desired. This is observed when the retraction speed is too high.

Figure 1B shows the same experiment however a solution of an ethylene-oxide containing surfactant (Triton^{®} X-100) is used in a concentration of 0.1 wt.%. It is clearly visible from the sequence of photographs that the retraction speed is much lower and the droplet does not rebound of the surface.

Figure 1C shows the same experiment however a solution of a trisiloxane surfactant (Zipper^{®}) not according to the invention is used in a concentration of 0.03 wt.%. It is clearly visible from the sequence of photographs that the retraction speed is similar to that of the water droplet and the droplet does rebound of the surface. Without wishing to be bound by any theory, the inventors believe that this is due to the slow arrival of the surfactant to the surface of the droplet.

This arrival of the surfactant to the surface of the droplet is called the characteristic time. This is the time for lowering the surface tension by the surfactant used. This time is measured according to the bubble pressure method as described by Aytouna et al., Exp.Fluids DOI 10.1007/s00348-009-0703-9. A surfactant that is suitable for use in the present invention may be selected using the characteristic time as one of the selection criteria. Preferably, a solution of said surfactant in a concentration of 0.05 wt.% has a characteristic time of at most 50 milliseconds, preferably at most 40 milliseconds, more preferably at most 30 milliseconds, such as at most 20 milliseconds or even at most 15 milliseconds.

It can be noted that the higher the characteristic time, the higher the dynamic surface tension during the impact and retraction stages, leading to rebound.

In an embodiment, the aqueous formulation according to the present invention has a characteristic time of at most 50 milliseconds, preferably at most 40 milliseconds, more preferably at most 30 milliseconds, such as at most 20 milliseconds or even at most 15 milliseconds.

Examples of plant protection products that can be used according to the present invention are: Basta^{®}, Roundup^{®}, Spotlight^{®}, Teppeki^{®}, UNIX^{®}, Thiovit^{®}, Fungistop^{®}, Regione^{®}, Supreme^{®}, Hussar^{®}, Calliste^{®}, Citadelle^{®}, Mikado^{®}, Milagro^{®}, Parlay^{®}, Scala^{®}, Equip^{®}, Karate Zeon^{®}, Evidan^{®}, Mancozeb^{®}, and Shirlan^{®}.

The plant protection product and/or active ingredient present in the spray formulation according to the present may be present in the amount as indicated by the manufacturer of said product and/or active ingredient or may be present in the amount determined by the person skilled in the art based on the requirements. However, using the adjuvant composition according to the present invention, the amount may be reduced by at least 5 %, more preferably at least 10 %, even more preferably at least 15%, such as at least 20% while achieving the same effect because the adjuvant composition according to the present invention increases the efficiency of the plant protection product and/or active ingredient.

Plant protection products may be solid products, such as, wettable powders, dispersible granules, as well as liquid products such as emulsifiable concentrates, suspensions, suspo-emulsions, concentrated emulsions.

Examples of suitable additives for all aspects of the present invention are a (an)ionic surfactant, a viscosity modifier, a stabilizer, a low odor paraffin solvent, an antifoam agent, a dye, a wetting agent, a dispersant, a disintegrant, a binder, a filler, a anti-caking agent a preservative and one or more combinations thereof. All these additives are known to a person skilled in the art and may be selected based on the conditions and desired results.

Non-limiting examples of suitable anionic surfactants are alkyl sulfates or alkyl phosphates, such as lauryl sulfates, sodium alkyl sulfosuccinates, sodium alkyl sulfates, sodium lauroyl sarcosinates, sodium myreth sulfates, sodium pareth sulfate, and sodium stearates.

Examples of suitable viscosity modifiers are xanthan and guar gum and other polysaccharides as well as glycerol.

Examples of suitable stabilizers are aliphatic alcohols, such as isopropyl alcohol.

Examples of suitable low odor paraffin solvents are alkanes, such as kerosene.

Examples of suitable antifoam agents are silicone substances.

Examples of suitable fillers are clays, synthetic silica compounds and diatomaceous earth, silicates of calcium or magnesium, titanium dioxide, oxides of aluminum, low-molecular weight polymer, zinc or calcium carbonates calcium or magnesium, sodium sulfate, ammonium, calcium, carbon black, and one or more combinations thereof. These fillers are inert.

In an embodiment of the formulation, the concentration of the non-ionic surfactant is between 0.001 wt.% and 10.0 wt.%, preferably between 0.01 wt.% and 5 wt.%, more preferably between 0.1 wt.% and 1 wt.%.

In an embodiment of said formulation, the active ingredient is present in an amount of between 0.05 wt.% to 25 wt.%, preferably between 0.1 wt.% to 10 wt.%, more preferably at most 5 wt.% or at most 2.5 wt.% or even at most 1 wt.% based on the total weight of the formulation.

In an embodiment of said formulation, the amount of water is between 70 wt.% and 99 wt.% based on the total weight of the formulation.

In an embodiment of said formulation, the polyethylene oxide is present at a concentration between 5 and 500 weight parts per million (wppm) in the spray formulation, preferably between 50 and 200 wppm.

The present inventor has found that in the formulation according to the present invention at least 0.001 wt.% surfactant and at least 0.005 g/l of polymer are required to achieve optimal effects. The precise amount required will vary depending on the other elements of the composition as well as the specific selection of surfactant and polymer.

Increasing the amount of the polymer will further increases droplet size. The exact percentages that are best for a given composition can readily be determined by one of skill in the art, and will be dependent on the desired median diameter of the spray droplet. The maximum acceptable droplet size may depend on the amount of composition being applied per unit area and the need for uniformity in spray coverage. Smaller droplets provide more even coverage, but are more prone to drift during spraying. Depending on the wind conditions, smaller or larger droplets may be preferred. The droplet size also depends on the spray apparatus used, for example on the type and size of the spray nozzle and the configuration of the apparatus. A person skilled in the art will readily be able to adjust the percentage of surfactant and/or polymer in the composition to provide the desired droplet size for a given apparatus, application, and conditions.

The viscosity of the adjuvant composition is preferably between 50 and 300 mPa.s, preferably between 100 and 250 mPa.s.

The viscosity of the treatment composition is preferably between 1 and 30 mPa.s, preferably between 1 and 3 mPa.s.

In an embodiment of the formulation, the viscosity at 20 °C is between 1 and 5 mPa.s, preferably at most 3 mPa.s, more preferably at most 2 mPa.s the viscosity of water at 20 °C is 1 mPa.s and hence the formulation preferably has a viscosity that is at most 5 times, preferably at most 3 times, more preferably at most 2 times the viscosity of water at 20 °C. Preferably, the viscosity is not greatly increased by the presence of the polyethylene oxide.

In an embodiment, the formulation or the adjuvant composition which, when mixed with an active ingredient into a formulation or the treatment composition when mixed into a formulation and sprayed onto the plant (parts), provides a spray having less than 20%, preferably less than 15 %, more preferably less than 10%, even more preferably less than 8% of fine droplets.

In an embodiment, the VMD50 is above 100 micrometer, preferably above 150 micrometer, more preferably above 200 micrometer, even more preferably above 250 micrometer. In an embodiment, the VMD50 is below 500 micrometer, preferably below 450 micrometer, more preferably below 400 micrometer. In an embodiment, the VMD50 is between 100 and 400 micrometer.

The dynamic surface tension is the surface tension during a nonequilibrium state and if often used for surfactant comprising solutions. **It** relates to the surface absorption of the surfactant. The surface tension decreases in time to the equilibrium or static surface tension.

The dynamic surface tension may for example be measured using the maximum bubble pressure (MBP) method. The maximum pressure is measure when a capillary is inserted into the formulation to be measured and while the capillary continuously generates air bubbles. When pressurized air continuously flows through the capillary, there is a periodical change in the pressure inside of the probe which pressure is maximized when the radius of the tip of the capillary and the radius of the curvature of the air bubbles. Upon further expansion of the bubbles, the pressure drops rapidly. From the maximum pressure, the surface tension is calculated over the life time of the bubbles, e.g. from the time that the new interface between the air bubble and the formulation is generated until the time maximum bubble pressure is reached. The amount of surfactant adsorbed during the life time will determine the surface tension.

In an embodiment of the formulation, the dynamic surface tension (DST) is at most 50 mN/m after 100 milliseconds (DST₁₀₀ₘₛ). In an embodiment of the formulation, the difference between the dynamic surface tension after 1 millisecond (DST₁ₘₛ) and after 100 milliseconds (DST₁₀₀ₘₛ) is at least 15 mN/m, preferably at least 20 mN/m. In an embodiment, the maximum dynamic surface tension after 1 millisecond is at most 70 mN/m.

The polymer according to the present invention provides an elevated normal stress coefficient. By normal stress in the context of the present application is meant the stress difference between the flow direction and the two directions perpendicular to it exerted during the flow of a fluid in steady simple shear flow. The first normal stress difference is the stress difference between the direction of the fluid velocity and the direction of the velocity variation. The second normal stress difference is the stress difference between the direction of the velocity variation and the remaining, third, neutral direction. These stress differences are associated with strain-induced anisotropy, arising from the departure of the polymeric molecules from their equilibrium, symmetrical average shape. The first normal stress difference is much larger than the second normal stress difference which is quite small. The first normal stress difference is practically always negative. From the first normal stress difference, the first normal stress coefficient can be calculated. The first normal stress coefficient is the ratio between the first normal stress difference and the square of the velocity gradient. See the handbooks: *"*Dynamics of polymeric liquids. Vol. 1: Fluid mechanics"; edited by Bird, Armstrong & Hassager; John Wiley and Sons Inc., New York, NY, 1987, especially paragraph 2.3 "Normal stress effects" and Melt Rheology and its applications in the plastics industry; 2013, XVI, by J.M. Dealy and J. Wang, Springer; [ISBN 978-94-007-6394-4], especially chapter 2 "viscosity and normal stress differences" for more information. See also A. Lindner et al. Physica A 319 (2003) 125-133. Said handbooks and publications are incorporated by reference into the present application.

It should be noted that the first normal stress coefficient is a measure of the drift reduction capacity and the slowing down of the retraction velocity. It is a property of the polymer and not dependent of the surfactant.

In an embodiment of the formulation, the first normal stress coefficient is greater than or equal to 10⁻⁸ Pa.s².

The present invention ensures an increase in the adherence of the droplets to any hydrophobic surface. This is evident by the slowing down of retraction after impact. After impact, the droplet spreads out and the retraction is the diminution of the drop diameter. The retraction speed typically becomes significantly lower than the value for pure water. The retraction speed for water is around 1 m/s for a droplet radius of 1.3 mm and an impact velocity of 2.5 m/s. When the composition according to the present invention is added to water at an exemplary concentration of 0.5 g/l the retraction speed is more than a factor of ten lower. This allows the droplet to remain stuck to the surface. Without wishing to be bound by any theory, the inventors believe that the retraction speed is mainly determined by the type of polymer used.

Preferably, the formulation according to the present invention ensures a retraction speed of the droplets deposited onto a surface that is at most 0.9 m/s, more preferably at most 0.75 m/s, even more preferably 0.5 m/s for a droplet radius of 2 mm and an impact velocity of 1 m/s.

The retraction speed is measured at the outer rim of the droplet after impact on the surface. It is measured at room temperature (20 °C). The retraction speed is measured by means of filming the drop impact and subsequent retraction using a Phantom v7.1 rapid camera working at 4,000-20,000 frames per second on (relatively) hydrophobic surfaces, which in the context of the present application means surfaces having a contact angle (θ) with pure water that is larger than 60 degrees. More information regarding the exact way to determine this retraction speed or retraction velocity can be found in Bartolo et al., Phys.Rev.Lett. (2007) 99, 174502 which is incorporated by reference.

The present composition comprising the combination of a non-ionic surfactant and a polyethylene oxide polymer also has an increased weatherability (i.e., the resistance to wash off by rain). The weatherability or rainfastness is incurred because the polymer complexes with the surfactant when the water from the spraying liquid is evaporating; for increasing combined polymer and surfactant concentrations a more gel-like layer may be formed that protects the pesticide from being washed off.

When the spray formulation is sprayed onto the surface of plant parts, this spray formulation will dry and the combination of a non-ionic surfactant and a polyethylene oxide polymer will form a thin film on the surface of the plant part that increases the weatherability. To further increase the weatherability additives in the form of complexing agents that are known to a person skilled in the art may be used.

In an embodiment, the weatherability, measured in the form of the rainfastness, of the formulation after spraying is at least 50%, preferably ate least 60%, more preferably at least 70%, more preferably at least 80%.

The rainfastness as used in the present description is measured by determining the amount of a given active ingredient remains on the plant (part) after the spraying of the aqueous formulation, a subsequent waiting period of 15 minutes and a typical rain shower. When no active ingredient is removed the rainfastness is set to 100%.

To test the rainfastness with and without the present adjuvant composition a pesticide (typically Shirlan^{®} at the concentration prescribed by the manufacturer Syngenta) is sprayed on a crop (typically onions). The resulting aqueous formulations are sprayed with a Teejet 11003XR nozzle at a rate equivalent to 250 liter of spraying liquid per hectare. Subsequently, the crop is left 15 minutes to dry, and two plates (one with the onions sprayed with an aqueous formulation of the pesticide and another with the onions sprayed with aqueous formulation of the pesticide and the present adjuvant composition) are brought outside in a typical rain shower that gives 1-2 mm of water per hour; the crop is left in the rain shower for 30 minutes. The plates are in a container that catches the rainwater. With the aid of a UV - spectrometer, the amount of pesticide in the rainwater is determined. The experiment is repeated 5 times and the total leaf surface should not vary more than 5% between the different experiments. The amount of pesticide that is present in the container, e.g. that is removed by the rain shower, is mathematically deducted from the amount of pesticide that is applied. From this the percentage of pesticide that remains on the crop is determined as the rainfastness. For example, if 1 gram of pesticide is sprayed on the plants and it is determined that 0.2 gram is found in the water in the container, a rainfastness of 80% is determined.

In an embodiment, the coverage from spray is preferably at least 100, more preferably at least 150 when a spray having a VMD of 200 micrometer is used. For a spray having a VMD of 400 micrometers the coverage is preferably at least 15, preferably at least 25. The maximum coverage obtainable during the measurement is usually perceived to be 250.

Coverage from spray on a specific leaf (typically onion, rose, potato or chrysanthemum) is measured by adding 0.01 % of Tinopal^{®} OD (which is 2,5-thiophenediylbis(5-tert-butyl-1,3-benzoxazole)) to the aqueous spray formulation. Then the leaf of a plant is taken and sprayed with a spray having a VDM50 of 200 micrometers. The leaf is then photographed under a UV lamp using a CCD (charge coupled device) camera. The intensity of the lamp ands exposure of the picture is not to be varied between different experiments. The resulting fluorescence intensity is determined by adding the values of all pixels in the photograph on the pictures. This value is then compared to fluorescence intensity of a substrate (glass) homogeneously coated with the spray solution for the same surface area. The maximum value is set to be 250 which is a scale for the grey shades per pixel. This is the value for coverage.

In mixing the components of the present treatment composition, the sequence and speed of addition of the components may play a role in creating a stable composition. Preferably, a conventional blending tank is first filled with a predetermined amount of water, and then the pesticide is added at a rate of maximally 1 liter or kg per minute. The mixture in the tank is then agitated until a homogeneous mixture is achieved. Next, the adjuvant composition is added at a rate of maximally 1 liter per minute until a homogeneous composition is achieved. The treatment composition can then be packaged into suitable containers, such as a 10 liter jug, or in bulk containers. The adjuvant composition once prepared may also be sorted in such containers.

The formulation of the present invention, or the composition according to the present invention upon being used with an active ingredient leads to a great reduction in the quantity of driftable fine droplets in the spraying operation (as compared to the same spraying process but without the composition of this invention), which results in up to 20% percent more active ingredient contacting the specific pest. This is an advantage of the present invention.

The present invention is also related to a method for controlling a pest, comprising combining the composition according to the present invention with water and with one or more active ingredients and one or more additives to prepare an aqueous plant protection formulation and applying the aqueous formulation to the pest and/or to the environment of the pest.

The present invention is also related to a method for controlling a pest, comprising combining the composition according to the present invention with water and with one or more plant protection products and optionally one or more additives to prepare an aqueous plant protection formulation and applying the aqueous formulation to the pest and/or to the environment of the pest.

The present invention is also related to a method for controlling a pest, comprising applying the aqueous formulation according to the present invention to the pest and/or to the environment of the pest.

In addition, the present invention provides a process for retarding drift and promoting deposition of an active ingredient or plant protection product in an agriculturally-related spraying operation, wherein the process comprises the steps of: obtaining an effective amount of the active ingredient or plant protection product; combining the active ingredient or plant protection product with a composition according to the present invention and optionally one or more additives and optionally water to obtain a formulation according to the present invention; and spraying the combination into a target area.

The present invention relates in an aspect to the use of polyethylene oxide having a molecular weight between 5 x 10⁵ and 1 x 10⁸g/mole and a non-ionic surfactant as a combined anti drift an deposition agent.

The present invention relates in an aspect to the use of the present adjuvant composition as a combined anti drift an deposition agent.

The present invention relates in an aspect to the use of polyethylene oxide having a molecular weight between 5 x 10⁵ and 1 x 10⁸g/mole and a non-ionic surfactant for increasing the rainfastness, preferably to a value of at least 50%.

The present invention relates in an aspect to the use of the present adjuvant composition for increasing the rainfastness, preferably to a value of at least 50%.

The composition according to the present invention provides a better adhesion of the droplets of the formulation to the, possibly hydrophobic, surface (e.g. plant leaves) that the droplets impact on. It was found that even for inclined surfaces, the composition according to the present invention ensures good coverage of the surface.

The reduction in spray drift is achieved simultaneously with the same formulation that reduces significantly the amount of droplets of small size (also called fine size), which are mainly responsible for the drift. For agricultural sprays, the main challenge is to reduce the number of droplets with a size smaller than 100 µm, since these are the main cause of water pollution by spray drift.

The type of nozzle is not limited in the present invention. Examples of nozzles that are suitable for use with the composition according to the present invention when used in broadcast spraying from either air or ground are flat spray nozzles providing a triangular spray. In other words, nozzles that provide a tapered edge flat spray pattern. These types of nozzles provide for uniform coverage in broadcast spraying of plants. The spray angle may vary according to the desired use and may be determined by a person skilled in the art. Examples are spray angles of 80 °, 90 °, 100 ° and 110°, such as the XR Teejet 110^{®} or nozzles from the Teejet ^{®} VisiFlow ^{®} range. They may be operated using a wide range of pressure, for example at a pressure between 2 and 5 bar.

Conventionally used spray nozzles may be classified into different drift reduction classes based on their performance irrespectively of the use of the present composition but dependent on the pressure used. The drift reduction classes are 50% drift reduction - with respect to a standard nozzle -, 75% drift reduction, 90 % drift reduction and 95% drift reduction. An example of such a classification is the BCPC (British Crop Protection Council) classification. The volume fraction of droplets having a droplet size smaller than 100 micrometer is used for this.

When for example Albuz lila at 7 bar pressure is used as the standard nozzle, a Teejet DG8002 may be classified in the 50% class, an Albuz AVI 80015 may be classified in the 75% class, a Lechler ID9001 may be classified in the 90% class, and a Albuz TVI80025 may be classified in the 95% class.

These nozzles may be used with suction of air, so called air injection nozzles, also called venturi nozzles and nozzles without suction of air, so called flat fan nozzles; the air injection nozzles providing larger droplets.

For example when a pressure of 4 bar is used with a 110-03 flat fan spray nozzle about 10-20 volume% of the sprayed liquid is present in the form of droplets smaller than 100 µm. These are so small that they easily drift away with the wind. If the composition according to the present invention is added at a typical concentration of 0.5 g/l, this percentage is reduced by at least one quarter.

**In** order to facilitate a further understanding of the invention, the following example is presented primarily for the purpose of illustrating more specific details thereof. The invention should not be deemed limited thereby.

### Materials and methods

The viscosity as specified in the present application has the unit of mPa.s and is measured at a temperature of 20 °C using an Anton Paar MCR302 rotational rheometer using a 50mm 1° cone-plate geometry. The rotational speed is varied to achieve shear rates between 1 and 1000 s⁻¹. The resulting shear stress is measurement and the viscosity is calculated as the ratio between the shear stress and shear rate. The duration of the measurement is 10 seconds for each shear rate at which time the viscosity value is determined.

The VMD50 as specified in the present application has the unit of micrometer and is measured using a laser diffraction technique using a Malvern SprayTech^{®} instrument with the spray nozzle 30 cm above the top of the laser beam. The Malvern Spraytec uses the technique of laser diffraction for measurement of the size of spray droplets and spray particles. The laser beam passes through spray and is diffracted; the diffracted beam is detected by a CCD detector that is directly opposite the laser. The diffraction pattern is then analyzed to calculate the size of the droplets and the volume of droplets and the number of droplets for each volume/size. From this, the VMD is calculated using known mathematical techniques.

The dynamic surface tension is measured using the maximum bubble pressure (MBP) method at 21 °C and has the unit of mN/m. The dynamic surface tension (DST) was measured in accordance with the following. A Kruss Processor controlled Bubble Pressure Tensiometer was used to determine the dynamic surface tension at short dynamic surface ages (from milliseconds to seconds). The temperature of the formulation in the Maximum Bubble Pressure (MBP) apparatus was thermostatically controlled to 21° C. The instrument uses the maximum bubble pressure method to measure the pressure change as a bubble is generated through a capillary of known diameter and pushed into the test formulation. During the measurement we used the following capillary Teflon 1mm inner diameter , air pressure 0-2 bar, bubble life time is measured from 1 milliseconds to 1 seconds. The maximum pressure found as a function of time during bubble generation corresponds to the time when the bubble is hemispherical and has the minimum radius of curvature. Given the known geometry of the capillary one can calculate the dynamic surface tension of the fluid from the known Laplace equation. The frequency of bubble generation is varied allowing one to find the dynamic surface tension as a function of time. The maximum bubble pressure (MBP) surface age is simply the empirical difference in time between the minimum bubble pressure and the maximum bubble pressure during bubble formation and does not reflect a true average surface age. Christov et al [Langmuir 2006, 22, 7528-754] showed that the MBP age was larger than the average universal surface age by a constant factor. For their apparatus the MBP age was found to be 36.8 times longer than the average universal surface age. The exact value of the constant shift is dependent on the specific apparatus geometry. The pressure is well approximated by a linear fit between the minimum and maximum bubble pressures. Using this linear approximation we consistently calculated the surface area of the bubble from the Laplace equation relating surface tension and pressure to determine the surface area vs time curves.

The present invention is elucidated by the following examples, which are in no way limiting to the scope of the invention as defined by the appended claims.

### Examples

As specified above, the present invention is related to the synergistic combination of a certain polyethylene oxide and a certain surfactant. In order to find these combinations, firstly a selection is made to find surfactants that could be suitable, this is done in Example 1. Secondly, a selection is made to find polyethylene oxide polymers that could be suitable, this is done in Example 2. Then, the combined, synergetic effect of several combinations of the surfactants and polymers found in Example 1 and 2 are tested in the following examples.

### Example 1

In this Example the effect of the surfactant was tested in a solution not comprising any polymer. It is used to select the most suitable surfactants and concentration thereof. Table 1 below shows in the first column the number of the test. When denoted with an asterisk (*) a surfactant is used that is not according to the present invention. The second column discloses the surfactant used. The following surfactants were tested. As a block copolymer the commercially available surfactant Synperonic^{®} PE or the corresponding Atlas^{™} G-5002L was used which gave the same results. As an ethylene-oxide containing surfactant, Triton^{®} X-100was used. As an anionic surfactant sodium dodecyl sulfate (SDS) was used. Also other surfactants were used that are normally present in pesticide formulations but that are not suitable for use in the present inventions. Examples of these are Zipper^{®}, and AOT. The third column shows the amount (concentration) of surfactant in wt.%. The 4^{th} through 7^{th} column show the retraction speed, the coverage, VMD50 and volume % of fine droplets, respectively.

**Table 1**

| **Example** | **Surfactant** | **Amount surfactant (wt.%)** | **Coverage from spray** | **VMD50 (µm)** | **V% < 100µm (%)** |
|---|---|---|---|---|---|
| 1.1 | Synperonic^{®} | 0.1 | 81 | 212 | 18.2 |
| 1.2 | Triton^{®} | 0.1 | 78 | 171 | 22.4 |
| 1.3 | SDS | 0.1 | 75 | 235 | 15.6 |
| 1.4* | Zipper^{®} | 0.1 | 33 | 281 | 13.3 |
| 1.5* | AOT | 0.1 | 60 | 235 | 15.6 |
| 1.6 | Synperonic^{®} | 0.001 | 40 | 185 | 21.4 |
| 1.7 | Triton^{®} | 0.001 | 44 | 183 | 23.5 |
| 1.8 | SDS | 0.001 | 39 | 178 | 24.3 |
| 1.9* | Zipper^{®} | 0.001 | 20 | 195 | 20.4 |
| 1.10* | AOT | 0.001 | 12 | 178 | 24.5 |

From the results it is clear that Zipper^{®} has a VMD50 that is higher than desired and a coverage from spray that is lower than desired. Moreover, AOT has a coverage from spray that is lower than desired. The surfactants according to the present invention show sufficient or even good results for coverage from spray and VMD50.

### Example 2

In this Example the effect of the polymer was tested in a solution not comprising any surfactant. It is used to select the most suitable molecular weight range for the polyethylene oxide polymer. Table 2 below shows in the first column the number of the test. When denoted with an asterisk (*) a polymer is used that is not according to the present invention. Example 2.1 uses a PEO having a molecular weight of 4 x 10⁶ and Example 2.2 uses a PEO having a molecular weight of 1 x 10⁵. The second column shows the concentration of the polymer. For each example four different concentrations were used, namely 0 (pure water), 0.005, 0.05, and 0.5. The 3^{rd} through 7^{th} column show first normal stress coefficient, the retraction speed (for a droplet radius of 2 mm and an impact velocity of 1 m/s), the coverage, VMD50 and volume % of fine droplets, respectively.

**Table 2**

| **Example** | **Polymer concentration (g/L)** | **First normal stress coefficient (Pa.s²)** | **Retraction speed (m/s)** | **Coverage from spray** | **VMD50 (µm)** | **V% < 100µm (%)** |
|---|---|---|---|---|---|---|
| 2.1 | 0 | 0 | 1.21 | 38 | 177 | 19.8 |
| | 0.005 | 1.92E-07 | 0.91 | 63 | 189 | 15.7 |
| | 0.05 | 1.92E-06 | 0.29 | 44 | 183 | 8.3 |
| | 0.5 | 1.92E-05 | 0.09 | 39 | 178 | 5.8 |
| 2.2* | 0 | 0 | 1.21 | 38 | 177 | 19.8 |
| | 0.005 | 2.16E-12 | 1.22 | 39 | 170 | 21 |
| | 0.05 | 2.16E-11 | 1.19 | 35 | 175 | 18.7 |
| | 0.5 | 2.16E-10 | 1.18 | 30 | 168 | 19.4 |

From the results it is clear that that is a PEO having a molecular weight that is lower than required by the present has a retraction speed that is too high and a volume % of fine that is too high. Moreover, the first normal stress coefficient is too low. The polymer according to the present invention show better results. It is also clear that upon increasing the concentration of the polymer, the retraction speed decreases and the volume % of fines decreases. Moreover, the first normal stress coefficient increases.

### Examples 3-7

In these Examples the effect of the concentration of the polymer and the concentration of the surfactant was tested. It is used to select the most suitable range of concentrations. Table 3 below shows in the first column the number of the test. When denoted with an asterisk (*) a surfactant is used that is not according to the present invention since it does not comply with the desired requirements. All Examples use a PEO having a molecular weight of 4 x 10⁶. The second column shows the trade name of the surfactant used. More information about the chemical nature of these surfactants is discussed above. The third column shows the concentration of the surfactant. For each example two different concentrations were used, namely 0.001 (tests a, c, and e) and 0.1 (tests b, d, and f). The fourth column shows the concentration of the polymer. For each example three different concentrations were used, namely 0.005 (tests a and b), 0.05 (tests c and d), and 0.5 (tests e and f). The 5^{th} through 9^{th} column show the retraction speed, the coverage, VMD50, the volume % of fine droplets, and the rainfastness, respectively.

| **Example** | **Surfactant** | **Amount surfactant (wt.%)** | **Polymer conc. (g/L)** | **Coverage from spray** | **VMD (50) (µm)** | **V% < 100 (µm)** | **Rain fastness (%)** |
|---|---|---|---|---|---|---|---|
| 3a | Synperonic^{®} | 0.001 | 0.005 | 50 | 190 | 20.5 | n.d. |
| 3b | | 0.1 | 0.005 | 113 | 212 | 18.2 | n.d. |
| 3c | | 0.001 | 0.05 | 95 | 209 | 9 | n.d. |
| 3d | | 0.1 | 0.05 | 212 | 249 | 7.3 | 89% |
| 3e | | 0.001 | 0.5 | 121 | 366 | 9.4 | n.d. |
| 3f | | 0.1 | 0.5 | 121 | 350 | 18.2 | n.d. |
| 4a | Triton^{®} | 0.001 | 0.005 | 45 | 182 | 21.4 | n.d. |
| 4b | | 0.1 | 0.005 | 117 | 171 | 22.4 | n.d. |
| 4c | | 0.001 | 0.05 | 110 | 220 | 8.4 | n.d. |
| 4d | | 0.1 | 0.05 | 198 | 244 | 7.6 | 73% |
| 4e | | 0.001 | 0.5 | 119 | 354 | 8.7 | n.d. |
| 4f | | 0.1 | 0.5 | 119 | 341 | 22.4 | n.d. |
| 5a | SDS | 0.001 | 0.005 | 47 | 191 | 22.1 | n.d. |
| 5b | | 0.1 | 0.005 | 108 | 212 | 15.6 | n.d. |
| 5c | | 0.001 | 0.05 | 98 | 215 | 8.1 | n.d. |
| 5d | | 0.1 | 0.05 | 208 | 235 | 7.9 | 54% |
| 5e | | 0.001 | 0.5 | 108 | 345 | 8.5 | n.d. |
| 5f | | 0.1 | 0.5 | 108 | 337 | 15.6 | n.d. |
| 6a* | Zipper^{®} | 0.001 | 0.005 | 33 | 202 | 20 | n.d. |
| 6b* | | 0.1 | 0.005 | 44 | 264 | 14.1 | n.d. |
| 6c* | | 0.001 | 0.05 | 66 | 221 | 10.2 | n.d. |
| 6d* | | 0.1 | 0.05 | 88 | 276 | 10.2 | 25% |
| 6e* | | 0.001 | 0.5 | 74 | 367 | 9.9 | n.d. |
| 6f* | | 0.1 | 0.5 | 74 | 360 | 13.3 | n.d. |
| 7a* | AOT | 0.001 | 0.005 | 24 | 194 | 22.3 | n.d. |
| 7b* | | 0.1 | 0.005 | 63 | 212 | 15.1 | n.d. |
| 7c* | | 0.001 | 0.05 | 71 | 188 | 12.3 | n.d. |
| 7d* | | 0.1 | 0.05 | 71 | 167 | 22.2 | 44% |
| 7e* | | 0.001 | 0.5 | 63 | 331 | 11.1 | n.d. |
| 7f* | | 0.1 | 0.5 | 63 | 312 | 14.7 | n.d. |

| | | | | | | | |
|---|---|---|---|---|---|---|---|
| n.d. = not determined | | | | | | | |

From these results it is clear that the surfactants not according to the invention do not provide a sufficient rainfastness. Moreover, the surfactants according to the invention provide better results.

### Comparative Example 8

Example 3d shown above was repeated but with a PEO having a lower molecular weight, viz. a g a molecular weight of 1 x 10⁵ which is not according to the invention.

| **Example** | **Surfactant** | **Amount surfactant (wt.%)** | **Polymer conc. (g/L)** | **Retraction speed (m/s)** | **Coverage from spray** | **VMD50 (µm)** | **V% < 100 (µm)** |
|---|---|---|---|---|---|---|---|
| 3d | Synperonic ^{®} | 0.1 | 0.05 | | 212 | 249 | 7.3 |
| 8* | Synperonic ^{®} | 0.1 | 0.05 | | 89 | 190 | 20.7 |

The table clearly shows that the coverage and the VMD50 are decreased whereas the volume of fine droplets is increased. This is clearly not desirable.

### Example 9

In this Example the effect of the surfactant on the rebound was tested by measuring the characteristic time associated with the dynamic surface tension of a droplet of a 0.05wt.% solution comprising a surfactant. Table 4 below shows in the first column the number of the test. When denoted with an asterisk (*) a surfactant is used that is not according to the present invention since it does not comply with the desired requirements. The second column shows the type of surfactant used. The last column shows the characteristic time in milliseconds.

| **Example** | **Surfactant** | **Characteristic Time (ms)** |
|---|---|---|
| 9a | Synperonic^{®} | 13 |
| 9b | Triton^{®} | 18 |
| 9c | SDS | 10 |
| 9d* | Zipper^{®} | 121 |
| 9e* | AOT | 103 |

The table clearly shows that the surfactants not according to the invention have a characteristic time that is loo high.

This invention has been described in detail with particular reference to certain embodiments. but variations and modifications can be made without departing from the spirit and scope of the invention as defined in the following claims.

## Claims

1. A process for retarding drift and promoting deposition of an active ingredient or plant protection product in an agriculturally-related spraying operation, wherein the process comprises the steps of:
- obtaining an effective amount of the active ingredient or plant protection product being a relative amount that is effective to control a pest or to promote plant growth when the formulation is spray applied to a plant and/or to an environment of the plant at a given application rate;
- combining the active ingredient or plant protection product with an adjuvant composition comprising a polyethylene oxide having a molecular weight between 5 x 10⁵ and 1 x 10⁸ g/mole and a non-ionic surfactant, and water to obtain an aqueous spray formulation, wherein the aqueous spray formulation comprises:
- polyethylene oxide in an amount of at least 0.005 g/liter;
- the non-ionic surfactant in an amount of at least 0.001 wt.%, wherein the non-ionic surfactant has a Hydrophilic-Lipophilic Balance (HLB) value of at least 10;
- the active ingredient in the effective amount; and
- water; and
- spraying the aqueous spray formulation into a target area from the air.

2. The process according to claim 1, wherein the polyethylene oxide has a molecular weight of at least 1 x 10⁶ g/mole, preferably at least 2 x 10⁶ g/mole, more preferably at least 3 x 10⁶ g/mole.

3. The process according to claim 1 or 2, wherein the non-ionic surfactant is selected from the group consisting of surfactants having a lipophilic part and an ethylene oxide-containing hydrophilic part, surfactants having a lipophilic part and a polysaccharide-containing hydrophilic part, and block-copolymer surfactants having a polymer lipophilic part and a block copolymer hydrophilic part.

4. The process according to claim 3, wherein the surfactant having a lipophilic part and an ethylene oxide-containing hydrophilic part is selected from the group consisting of fatty alcohol polyglycol ethers, preferably narrow range ethoxylates (NRE), or ethylene glycol n-alkane ethers.

5. The process according to claim 3, wherein the block-copolymer surfactant is a surfactant having one lipophilic block and one hydrophilic block, preferably comprising styrene or PPO as the lipophilic block, more preferably a (PPO)-(PEO-PPO) block copolymer.

6. The process according to claim 3, wherein the surfactant having a lipophilic part and a polysaccharide-containing hydrophilic part is selected from the group consisting of cocamide monoethanolamines, sorbitan monostearates, and alkyl polyglucosides.

7. The process according to any one of the preceding claims, wherein the weight ratio between the polyethylene oxide and the non-ionic surfactant is between 5:1 and 1:10, preferably between 2:1 and 1:5, more preferably between 1:1 and 1:3, for example 1:2.

8. The process according to any one of the preceding claims, wherein the at least one active ingredient is selected from the group consisting of a plant growth regulator, a defoliant, a growth stimulator, a nutrient, and a pesticide.

9. The process according to claim 8, wherein the pesticide is selected from the group consisting of a herbicide, an insecticide, a fungicide, a nematicide, a molluscicide, and a miticide.

10. The process according to any one of the preceding claims, wherein the active ingredient is present in the aqueous spray formulation in an amount of at least 0.05 wt.%.

11. The process according to any one of the preceding claims, wherein the concentration of the non-ionic surfactant in the aqueous spray formulation is between 0.001 wt.% and 10.0 wt.%, preferably between 0.01 wt.% and 5 wt.%.

12. The process according to any one of the preceding claims, wherein the amount of the polyethylene oxide in the aqueous spray formulation is between 0.1 and 10 g/l, preferably between 1 and 5 g/l.

13. The process according to any one of the preceding claims, wherein the Hydrophilic-Lipophilic Balance (HLB) value is at least 12.
